# EUROPÄISCHE PATENTANMELDUNG

(11) **EP 1 586 917 A2**
(43) Veröffentlichungstag der Anmeldung: **19.10.2005**
(21) Anmeldenummer: 05007834.4
(22) Anmeldetag: 09.04.2005
(51) Int. Cl.: G01S 13/75, G06K 7/00

(54) **Verfahren zur Auswahl eines oder mehrer Transponder**

(30) Priorität: 14.04.2004 DE 102004018540
(71) Anmelder: ATMEL Germany GmbH, 74072 Heilbronn (DE)
(72) Erfinder: Friedrich, Ulrich, Dipl.-Ing. (FH), 74248 Ellhofen (DE); Pangels, Michael, Dipl.-Ing., 71642 Ludwigsburg (DE)

(57) **Zusammenfassung**

2.1. Die Erfindung bezieht sich auf ein Verfahren zur Auswahl eines oder mehrerer, insbesondere rückstreubasierter, Transponder aus einer Vielzahl von Transpondern (TR1, TR2, TR3, TR4) durch eine Basisstation (BS), dem ein ALOHA- oder ein slotbasiertes ALOHA-Verfahren zugrunde liegt, bei dem eine in einem jeweiligen Transponder erzeugte Zufallszahl den Zeitpunkt bestimmt, an dem der jeweilige Transponder eine Kennung an die Basisstation (BS) sendet.
2.2. Erfindungsgemäß sendet die Basisstation (BS) ein Auswahlkommando (AK), anschließend übertragen zur Ermittlung, ob mindestens ein Transponder durch das Auswahlkommando (AK) angesprochen wird, alle angesprochenen Transponder (TR1, TR2, TR3) zeitgleich an einem ersten Zeitpunkt (Z1) eine Kennung (K1, K2, K3) an die Basisstation (BS) und wenn mehr als ein Transponder angesprochen wird, überträgt jeder angesprochene Transponder (TR1, TR2, TR3) mindestens ein weiteres Mal seine Kennung (K1, K2, K3) an einem weiteren Zeitpunkt (Z2, Z3, Z4) an die Basisstation (BS), wobei der weitere Zeitpunkt (Z2, Z3, Z4) vom Wert der im jeweiligen Transponder erzeugten oder einer zu erzeugenden Zufallszahl bestimmt wird.
2.3. Verwendung z.B. in RFID-Systemen.

## Beschreibung

Die Erfindung bezieht sich auf ein Verfahren zur Auswahl eines oder mehrerer Transponder aus einer Vielzahl von Transpondern durch eine Basisstation gemäß dem Oberbegriff des Anspruchs 1.

Derartige Auswahlverfahren, die auch als Antikollisionsverfahren bezeichnet werden, finden beispielsweise bei kontaktlosen Identifikationssystemen oder sogenannten Radio-Frequency-Identification(RFID)-Systemen Verwendung. Ein derartiges System besteht üblicherweise aus einer Basisstation bzw. einem Lesegerät und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die sogenannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying(ASK)-Unterträgermodulation, bei der die Frequenz oder die Phasenlage des Unterträgers geändert wird.

Wenn die Datenübertragung nur zwischen einem bzw. einer Gruppe von Transpondern und der Basisstation erfolgen soll, muss vor der entsprechenden Datenübertragung ein Auswahlverfahren durchgeführt werden.

Grundsätzlich wird hierbei zwischen stochastischen und deterministischen Auswahlverfahren unterschieden. Eine ausführliche Beschreibung sowohl zu deterministischen Auswahlverfahren als auch zu stochastischen Auswahlverfahren findet sich beispielsweise in dem Lehrbuch Klaus Finkenzeller, RFID-Handbuch, 3. Aufl., HANSER, 2002, siehe insbesondere Kapitel 7.2 Vielfachzugriffsverfahren.

Stochastische Verfahren setzen im Gegensatz zu deterministischen Verfahren keine eindeutige, sogenannte Unique-Identification(U-ID) voraus, deren Aufbau beispielsweise in der Norm ISO 15963 beschrieben ist. Eine Vergabe derartiger U-IDs wird unter anderem von verschiedenen herstellerunabhängigen Organisationen vorgenommen, beispielsweise der EAN/UCC oder der IATA. Die Vergabe kann jedoch auch von einem Hersteller selbst vorgenommen werden. Insgesamt kann folglich in offenen Systemen, bei denen sich Transponder beliebiger Hersteller im Ansprechbereich einer Basisstation befinden können, die Eindeutigkeit der U-ID nicht immer sichergestellt werden. Stochastische Verfahren ermöglichen eine Auswahl auch in diesen Fällen. Beispiele für derartige stochastische Verfahren sind das sogenannte ALOHA-Verfahren, das slotbasierte bzw. slotted ALOHA-Verfahren sowie das dynamische slotbasierte ALOHA-Verfahren.

Das ALOHA-Verfahren ist ein transpondergesteuertes, stochastisches Verfahren, bei dem die Transponder zeitversetzt ihre zu übertragenden Daten senden. Der Zeitversatz wird in der Regel auf Basis einer im Transponder erzeugten Zufallszahl eingestellt. Wenn mehrere Transponder eine Kennung innerhalb des gleichen Zeitschlitzes senden, tritt eine sogenannte Kollision auf. Dies verhindert üblicherweise, dass die Basisstation die gesendeten Daten fehlerfrei empfangen kann.

Beim slotbasierten ALOHA-Verfahren ist die Kollisionswahrscheinlichkeit im Vergleich zum einfachen ALOHA-Verfahren deutlich reduziert. Es ist ein von der Basisstation gesteuertes, stochastisches Verfahren, bei dem die Transponder nur zu definierten, synchronen Zeitpunkten aktiv sind, d.h. mit der Übertragung von Daten beginnen. Hierzu gibt die Basisstation nummerierte Zeitschlitze bzw. Slots vor und die Transponder erzeugen jeweils eine Zufallszahl, wobei jeder Transponder, dessen Zufallszahl der Nummer eines Zeitschlitzes entspricht, Daten bzw. eine Kennung in diesem Zeitschlitz an die Basisstation sendet. Zur Einleitung des Auswahlverfahrens sendet die Basisstation in der Regel ein Kommando an die Transponder, durch das der Beginn einer Auswahlprozedur angezeigt wird. Nach Empfang des Kommandos werden in den Transpondern die jeweiligen Zufallszahlen gespeichert, die beispielsweise vorher im Transponder berechnet wurden. Wenn lediglich ein Transponder eine Kennung innerhalb eines Zeitschlitzes sendet, ist dieser Transponder innerhalb des Zeitschlitzes ausgewählt bzw. kann durch die Basisstation durch Senden eines Quittungssignals ausgewählt werden. Die Basisstation kann dann beispielsweise Schreib- und/oder Leseoperationen auf diesem Transponder ausführen. Wenn mehrere Transponder eine Kennung innerhalb des gleichen Zeitschlitzes senden, tritt eine Kollision auf. Abhängig von der Bitkodierung kann die Basisstation eine solche Kollision unmittelbar oder mit Verzögerung erkennen und den entsprechenden Zeitschlitz überspringen und versuchen Zeitschlitze abzuarbeiten, in denen keine Kollision auftritt, oder eine neue Auswahlprozedur durch Senden eines entsprechenden Kommandos an die Transponder einleiten. Da die Transponder üblicherweise neue Zufallszahlen erzeugen bzw. speichern, besteht die Möglichkeit, dass nun keine Kollision mehr auftritt.

Zur Lösung dieses Problems existiert das dynamische slotbasierte ALOHA-Verfahren, bei dem die Anzahl der zur Verfügung stehenden Zeitschlitze durch die Basisstation gesteuert werden kann. Ein derartiges Verfahren ist beispielsweise in der ISO 18000-6 FCD Type A beschrieben. Hierbei kann die Basisstation beispielsweise ein Auswahlverfahren mit einer geringen Anzahl von Zeitschlitzen einleiten. Wenn hierbei häufig Kollisionen auftreten, kann die Basisstation ein neues Auswahlverfahren einleiten, bei dem die Anzahl der Zeitschlitze erhöht wird, wodurch die Kollisionswahrscheinlichkeit abnimmt. Die für ein derartiges dynamisches Verfahren benötigte Zeit ist jedoch relativ groß, da die Einstellung der optimalen Anzahl der Zeitschlitze viel Zeit in Anspruch nehmen kann. Weiterhin erfordert es aufgrund seiner Komplexität einen entsprechend hohen Schaltungsaufwand.

Allen genannten slotbasierten ALOHA-Verfahren ist zu eigen, dass die Anzahl der benötigten Slots stark zunimmt, wenn die Anzahl der Transponder im Ansprechbereich der Basisstation steigt. Zur Lösung dieses Problems wird in der ISO 18000-6 FCD Type A eine Vorselektion mit Hilfe eines Group-Select-Kommandos vorgeschlagen. Hierbei wird lediglich eine Teilmenge bzw. Gruppe aller Transponder angesprochen. Wenn eine derartige Vorselektion vorgeschaltet wird, ist es der Basis-station zunächst nicht bekannt, ob ein bzw. wie viele Transponder durch die Vorselektion angesprochen werden und anschließend am Auswahlverfahren teilnehmen. Da nachfolgend in allen Slots überprüft werden muss, ob ein Transponder eine Kennung sendet, benötigt das Auswahlverfahren relativ viel Zeit, selbst wenn kein Transponder durch die Vorselektion angesprochen wird. Gleiches gilt für ein slotbasiertes Auswahlverfahren ohne Vorselektion, da auch hier grundsätzlich alle Slots überprüft werden.

Der Erfindung liegt als technisches Problem die Bereitstellung eines ALOHA-basierten Verfahrens zur Auswahl eines oder mehrerer Transponder zugrunde, mit dem eine vergleichsweise zeitsparende Auswahl unter Berücksichtigung unterschiedlicher Auswahlszenarien möglich ist.

Die Erfindung löst dieses Problem durch die Bereitstellung eines Verfahrens mit den Merkmalen des Anspruchs 1.

Erfindungsgemäß sendet die Basisstation ein Auswahlkommando, anschließend übertragen zur Ermittlung, ob mindestens ein Transponder durch das Auswahlkommando angesprochen wird, alle angesprochenen Transponder zeitgleich an einem ersten Zeitpunkt eine Kennung an die Basisstation und wenn mehr als ein Transponder angesprochen wird, überträgt jeder angesprochene Transponder mindestens ein weiteres Mal seine Kennung an einem weiteren Zeitpunkt an die Basisstation, wobei der weitere Zeitpunkt vom Wert der im jeweiligen Transponder erzeugten oder einer zu erzeugenden Zufallszahl bestimmt wird. Durch die zeitgleiche Übertragung der Kennung am ersten Zeitpunkt kann die Basisstation erkennen, ob durch das Auswahlkommando mindestens ein Transponder angesprochen wird. Wenn kein Transponder seine Kennung am ersten Zeitpunkt an die Basisstation überträgt, kann die aktuelle Auswahl sofort abgebrochen bzw. beendet werden, ohne dass weitere, bei diesem Auswahlszenario nicht notwendige Verfahrensschritte durchgeführt werden. Dies reduziert die Auswahldauer in diesem Fall drastisch. Wenn lediglich ein Transponder seine Kennung am ersten Zeitpunkt überträgt, ist dieser Transponder ausgewählt bzw. kann durch die Basisstation durch Senden eines Quittungssignals ausgewählt werden. Die Basisstation kann dann beispielsweise Schreib- und/oder Leseoperationen auf diesem Transponder ausführen. Wenn mehrere Transponder eine Kennung am ersten Zeitpunkt senden bzw. übertragen, tritt eine Kollision auf. Abhängig von der Bitkodierung kann die Basisstation eine solche Kollision unmittelbar oder mit Verzögerung erkennen. In diesem Fall überträgt jeder Transponder an einem Zeitpunkt, der von seiner jeweiligen Zufallszahl abhängt, ein weiteres Mal seine Kennung. Dieser Schritt entspricht im wesentlichen dem herkömmlichen, ALOHA-basierten Auswahlverfahren. Wenn die Datenübertragung zwischen Basisstation und Transpondern im Vollduplexbetrieb stattfindet, kann unmittelbar nach dem Auftreten bzw. dem Erkennen einer Kollision ein Kommando von der Basisstation an die Transponder übertragen werden, welches beispielsweise bei einem slotbasierten ALOHA-Verfahren einen Wechsel in einen nachfolgenden Slot anzeigt bzw. bewirkt. Dies ist auch bei einer asynchronen Datenübertragung im Vollduplexbetrieb möglich.

In einer Weiterbildung des Verfahrens nach Anspruch 2 erzeugt ein Transponder, dessen Zufallszahl dem ersten Zeitpunkt entspricht, erneut so lange eine Zufallszahl, bis diese nicht mehr dem ersten Zeitpunkt entspricht. Anhand der erneut erzeugten Zufallszahl wird der weitere Zeitpunkt bestimmt. Wenn zum ersten Zeitpunkt mehr als ein Transponder seine Kennung überträgt, überträgt jeder Transponder an dem weiteren Zeitpunkt seine Kennung nochmals. Eine Zufallszahl, die dem ersten Zeitpunkt entspricht, ist jedoch ungültig, da der Zeitpunkt zur nochmaligen Übertragung der Kennung vom ersten Zeitpunkt verschieden sein muss. Transpondern, deren jeweilige Zufallszahl dem ersten Zeitpunkt entspricht, kann auf diese Weise ein neuer und gültiger Zeitpunkt zur nochmaligen Übertragung ihrer Kennung zugeordnet werden.

In einer Weiterbildung des Verfahrens nach Anspruch 3 entsprechen den möglichen Werten einer Zufallszahl in einem jeweiligen Transponder Zeitpunkte, die nach dem ersten Zeitpunkt liegen. Auf diese Weise kann vermieden werden, dass die Zufallszahl derjenigen Transponder erneut erzeugt werden muss, deren Zufallszahl dem ersten Zeitpunkt entspricht.

In einer Weiterbildung des Verfahrens nach Anspruch 4 liegt bei einem slotbasierten ALOHA-Verfahren der erste Zeitpunkt innerhalb eines Slots, insbesondere des ersten Slots nach dem Auswahlkommando. Wenn ein slotbasiertes ALOHA-Verfahren verwendet wird, kann die Detektion, ob mindestens ein Transponder durch das Auswahlkommando angesprochen wird, innerhalb eines von der Basisstation vorgegebenen Slots stattfinden. Dies vereinfacht die Auswertung, da die Steuerung zentral von der Basisstation vorgenommen wird.

In einer Weiterbildung des Verfahrens nach Anspruch 5 erzeugt ein Transponder, dessen Zufallszahl dem Slot des ersten Zeitpunkts entspricht, erneut so lange eine Zufallszahl, bis diese nicht mehr dem Slot des ersten Zeitpunkts entspricht. Eine Zufallszahl, die dem Slot des ersten Zeitpunkts entspricht, d.h. demjenigen Slot, in dem alle angesprochenen Transponder ihre Kennung an die Basisstation übertragen, ist ungültig, da die nochmalige Übertragung der Kennung in einem anderen Slot erfolgen muss. Transpondern, deren jeweilige Zufallszahl dem Slot des ersten Zeitpunkts entspricht, kann auf diese Weise ein neuer und gültiger Slot zur nochmaligen Übertragung ihrer Kennung zugeordnet werden.

In einer Weiterbildung des Verfahrens nach Anspruch 6 sind die Zufallszahlen denjenigen Slots zugeordnet, die auf den ersten Slot nach dem Auswahlkommando folgen. Auf diese Weise kann vermieden werden, dass die Zufallszahl derjenigen Transponder erneut erzeugt werden muss, deren Zufallszahl dem Slot des ersten Zeitpunkts entspricht.

In einer Weiterbildung des Verfahrens nach Anspruch 7 wird bei einem Empfangen einer von der Basisstation gesendeten Synchronisationsmarke die erneute Erzeugung der Zufallszahl beendet. Wenn die Datenübertragung zwischen der Basisstation und einem Transponder synchron erfolgt, werden von der Basisstation Synchronisationsmarken oder Zeichenabgrenzungsmarken erzeugt, die auch als "Notch" bezeichnet werden. Der Transponder ändert hierbei das zurückgestreute Signal synchron zu den von der Basisstation erzeugten und gesendeten Synchronisationsmarken. Weiterhin können die Synchronisationsmarken zur Datenübertragung von der Basisstation zum Transponder verwendet werden. Die Wertigkeit eines von der Basisstation übertragenen Zeichens wird hierbei beispielsweise durch den zeitlichen Abstand bzw. die Dauer zwischen jeweils zwei aufeinanderfolgenden Synchronisationsmarken bestimmt. Liegt die Dauer beispielsweise über einem einstellbaren Schwellwert beträgt der Wert des Zeichens "1" andernfalls "0". Der Empfang einer derartigen Synchronisationsmarke kann hierbei als Triggerbedingung innerhalb eines Transponders zum Beginn bzw. dem Ende der Zufallszahlenerzeugung dienen. Dies vereinfacht die Realisierung des Verfahrens in einem Transponder, da die Triggerbedingungen zentral von der Basisstation erzeugt werden.

Vorteilhafte Ausführungsformen der Erfindung sind in den Zeichnungen dargestellt und werden nachfolgend beschrieben. Hierbei zeigen schematisch:
- Fig. 1: ein Diagramm eines zeitlichen Ablaufs einer ersten Variante eines Auswahlvorgangs und
- Fig. 2: ein Diagramm eines zeitlichen Ablaufs einer zweiten Variante eines Auswahlvorgangs.

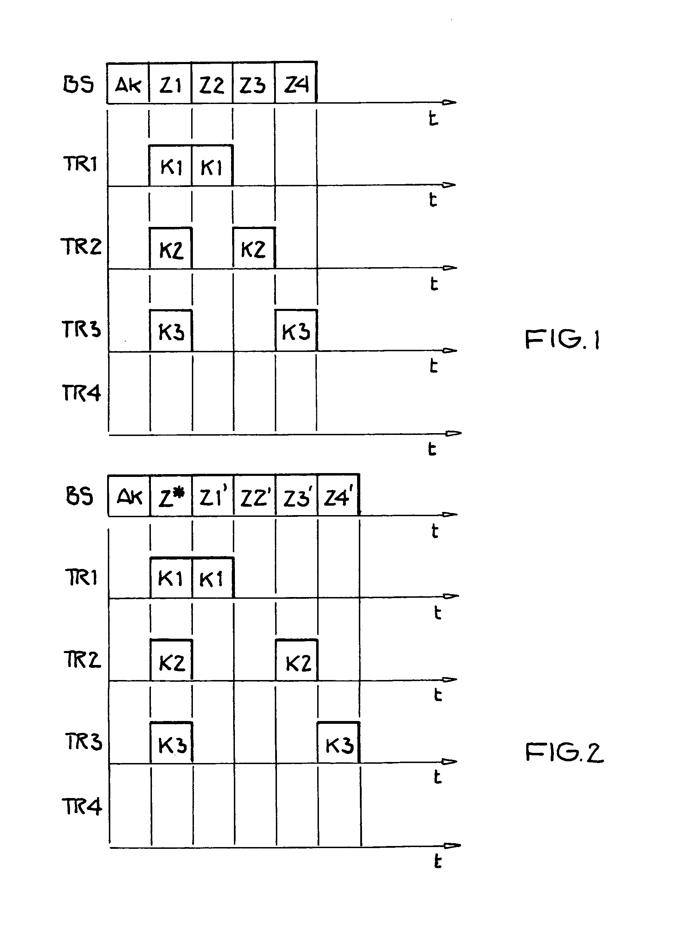

Fig. 1 zeigt ein Diagramm eines zeitlichen Ablaufs einer ersten Variante eines Auswahlvorgangs, an dem eine Basisstation BS sowie vier Transponder TR1 bis TR4 beteiligt sind. Das gezeigte Auswahlverfahren basiert auf einem slotbasierten ALOHA-Verfahren, bei dem die Basisstation nummerierte Zeitschlitze bzw. Slots Z1 bis Z4 vorgibt. Das Auswahlverfahren wird dadurch eingeleitet, dass die Basisstation BS ein Auswahlkommando AK sendet. Das Auswahlkommando AK umfasst ein Group-Select-Kommando, d.h. es wird lediglich eine Teilmenge aller Transponder TR1 bis TR4 im Ansprechbereich der Basisstation angesprochen. Durch das Group-Select-Kommando werden hier die Transponder TR1 bis TR3 vorselektiert, der Transponder TR4 nimmt nicht am gezeigten Auswahlverfahren teil.

Nach dem Empfang des Auswahlkommandos AK erzeugen die Transponder TR1 bis TR3 jeweils eine Zufallszahl, die in den jeweiligen Transpondern TR1 bis TR3 abgespeichert wird. Die Erzeugung kann beispielsweise mit Hilfe eines sogenannten linearen rückgekoppelten Schieberegisters(LFSR) erfolgen. Die Zufallszahl des Transponders TR1 entspricht dem Zeitschlitz Z1, die Zufallszahl des Transponders TR2 entspricht dem Zeitschlitz Z3 und die Zufallszahl des Transponders TR3 entspricht dem Zeitschlitz Z4.

Die Basisstation überträgt nun ein nicht gezeigtes Kommando, das den ersten Zeitschlitz bzw. Slot Z1 anzeigt. Die Transponder TR1 bis TR3 übertragen im ersten Zeitschlitz Z1 gleichzeitig jeweils ihre Kennungen K1, K2 bzw. K3 an die Basisstation BS. Anhand der dadurch auftretenden Kollision erkennt die Basisstation BS, dass mindestens zwei Transponder am Auswahlverfahren teilnehmen. Wenn die Datenübertragung zwischen Basisstation BS und den Transpondern TR1 bis TR3 im Vollduplexbetrieb stattfindet, kann unmittelbar nach dem Auftreten bzw. dem Erkennen einer Kollision, d.h. bevor die jeweiligen Kennungen K1 bis K3 vollständig übertragen werden, ein Kommando von der Basisstation BS an die Transponder TR1 bis TR3 übertragen werden, welches einen Wechsel in den nachfolgenden Zeitschlitz Z2 bewirkt, da bereits beim ersten Auftreten einer Kollision an einer Bitposition des zurückgestreuten Signals feststeht, dass mindestens zwei Transponder ihre Kennung gleichzeitig übertragen. Dies gilt selbstverständlich auch bei einer asynchronen Datenübertragung.

Wenn kein Transponder eine Kennung innerhalb des Zeitschlitzes Z1 übertragen hätte, wäre das Auswahlverfahren sofort beendet und gegebenenfalls mit einer veränderten Vorselektion neu gestartet worden. Wenn lediglich ein Transponder seine Kennung übertragen hätte, wäre dieser Transponder ausgewählt gewesen bzw. könnte durch die Basisstation durch Senden eines Quittungssignals ausgewählt werden. Die Basisstation kann dann beispielsweise Schreib- und/oder Leseoperationen auf diesem Transponder ausführen.

Die Zufallszahl des Transponders TR1 entspricht dem Zeitpunkt bzw. Zeitschlitz Z1, in dem alle Transponder TR1 bis TR3 ihre Kennung übertragen haben. Da in diesem Zeitschlitz grundsätzlich Kollisionen auftreten, sobald mehr als ein Transponder am Auswahlverfahren teilnimmt, kann ein Transponder, dessen Zufallszahl diesem Zeitschlitz entspricht, ohne eine erneute Erzeugung einer Zufallszahl nicht innerhalb dieses Auswahlvorgangs ausgewählt werden. Hierzu ist eine Wiederholung des gesamten Auswahlvorgangs notwendig, bei dem alle Transponder erneut Zufallszahlen erzeugen. Hierbei besteht dann die Möglichkeit, dass der entsprechende Transponder nun eine Zufallszahl erzeugt, die nicht dem Zeitschlitz Z1 entspricht.

Um diese systematische Unzulänglichkeit zu vermeiden, erzeugt der Transponder TR1 bei dem erfindungsgemäßen Auswahlverfahren so lange eine Zufallszahl, bis diese nicht mehr dem Zeitschlitz Z1 entspricht. Die derart erzeugte, neue Zufallszahl entspricht im gezeigten Ausführungsbeispiel dem Zeitschlitz Z2. Die verbleibenden Transponder TR2 und TR3 erzeugen keine neuen Zufallszahlen.

Die Basisstation überträgt nun ein nicht gezeigtes Kommando, das den zweiten Zeitschlitz Z2 anzeigt. Da, wie oben ausgeführt, die Zufallszahl des Transponders TR1 diesem Zeitschlitz Z2 entspricht, sendet der Transponder TR1 seine Kennung K1 innerhalb dieses Zeitschlitzes Z2 an die Basisstation BS. Der Transponder TR1 kann nun innerhalb des Zeitschlitzes Z2 ausgewählt werden.

Nachfolgend überträgt die Basisstation BS nun weitere Kommandos, welche die Zeitschlitze Z3 bzw. Z4 anzeigen. Der Transponder TR2 überträgt seine Kennung K2 entsprechend seiner Zufallszahl im Zeitschlitz Z3 und der Transponder TR3 überträgt seine Kennung K3 entsprechend seiner Zufallszahl im Zeitschlitz Z4, wobei jeweils eine Auswahl stattfinden kann.

Nach dem Zeitschlitz Z4 endet das Auswahlverfahren. Das in Fig. 1 gezeigte Auswahlverfahren benötigt im Vergleich zu einem herkömmlichen, slotbasierten Auswahlverfahren keine zusätzlichen Slots. Es wird jedoch ein Slot, im gezeigten Ausführungsbeispiel ist dies der erste Slot Z1, für die Erkennung verwendet, ob überhaupt Transponder durch das Auswahlkommando angesprochen werden.

Fig. 2 zeigt ein Diagramm eines zeitlichen Ablaufs einer Variante des in Fig. 1 gezeigten Auswahlvorgangs. Hierbei wird im Vergleich zu dem in Fig. 1 gezeigten Auswahlvorgang ein weiterer Slot benötigt. Der Slot, in dem alle angesprochenen Transponder TR1 bis TR3 gleichzeitig ihre Kennung übertragen, wird hier mit Z* bezeichnet. Im Gegensatz zu dem in Fig. 1 beschriebenen Verfahren, entspricht jedoch kein möglicher Wert einer Zufallszahl dem Slot Z*. Die Zufallszahlen der Transponder TR1 bis TR3 sind hierbei denjenigen Slots Z1' bis Z4' zugeordnet, die auf den ersten Slot Z* nach dem Auswahlkommando AK folgen. Im gezeigten Ausführungsbeispiel entspricht die Zufallszahl des Transponders TR1 dem Zeitschlitz Z1', die Zufallszahl des Transponders TR2 dem Zeitschlitz Z3' und die Zufallszahl des Transponders TR3 entspricht dem Zeitschlitz Z4'. Im Vergleich zu Fig. 1 kann die erneute Erzeugung einer Zufallszahl im Transponder TR1 entfallen, es wird jedoch ein weiterer Slot benötigt. Ansonsten verläuft die weitere Auswahl analog zu der in Fig. 1 gezeigten Auswahl.

Die gezeigten ALOHA-basierten Auswahlverfahren bzw. Auswahlvorgänge ermöglichen eine vergleichsweise zeitsparende Auswahl unter Berücksichtigung unterschiedlicher Auswahlszenarien. Die gezeigten Ausführungsbeispiele zeigen jeweils einen slotbasierten Auswahlvorgang. Das erfindungsgemäße Verfahren ist jedoch selbstverständlich auch im Kontext nicht slotbasierter ALOHA-Verfahren anwendbar.

## Patentansprüche

1. Verfahren zur Auswahl eines oder mehrerer, insbesondere rückstreubasierter, Transponder aus einer Vielzahl von Transpondern (TR1, TR2, TR3, TR4) durch eine Basisstation (BS),
- dem ein ALOHA- oder ein slotbasiertes ALOHA-Verfahren zugrunde liegt, bei dem eine in einem jeweiligen Transponder erzeugte Zufallszahl den Zeitpunkt bestimmt, an dem der jeweilige Transponder eine Kennung an die Basisstation (BS) sendet,
**dadurch gekennzeichnet, dass**
- die Basisstation (BS) ein Auswahlkommando (AK) sendet,
- anschließend, zur Ermittlung, ob mindestens ein Transponder durch das Auswahlkommando (AK) angesprochen wird, alle angesprochenen Transponder (TR1, TR2, TR3) zeitgleich an einem ersten Zeitpunkt (Z1, Z*) eine Kennung (K1, K2, K3) an die Basisstation (BS) übertragen, und
- wenn mehr als ein Transponder angesprochen wird, jeder angesprochene Transponder (TR1, TR2, TR3) mindestens ein weiteres Mal seine Kennung (K1, K2, K3) an einem weiteren Zeitpunkt (Z2, Z3, Z4, Z1', Z3', Z4') an die Basisstation (BS) überträgt, wobei der weitere Zeitpunkt (Z2, Z3, Z4, Z1', Z3', Z4') vom Wert der im jeweiligen Transponder erzeugten oder einer zu erzeugenden Zufallszahl bestimmt wird.

2. Verfahren nach Anspruch 1, **dadurch gekennzeichnet, dass** ein Transponder (TR1), dessen Zufallszahl dem ersten Zeitpunkt (Z1) entspricht, erneut so lange eine Zufallszahl erzeugt, bis diese nicht mehr dem ersten Zeitpunkt (Z1) entspricht und anhand dieser der weitere Zeitpunkt (Z2) bestimmt wird.

3. Verfahren nach Anspruch 1, **dadurch gekennzeichnet, dass** den möglichen Werten einer Zufallszahl in einem jeweiligen Transponder Zeitpunkte (Z1', Z2', Z3', Z4') entsprechen, die nach dem ersten Zeitpunkt (Z*) liegen.

4. Verfahren nach einem der vorhergehenden Ansprüche, **dadurch gekennzeichnet, dass** bei einem slotbasierten ALOHA-Verfahren der erste Zeitpunkt innerhalb eines Slots, insbesondere des ersten Slots (Z1, Z*) nach dem Auswahlkommando (AK), liegt.

5. Verfahren nach Anspruch 4, **dadurch gekennzeichnet, dass** ein Transponder (TR1), dessen Zufallszahl dem Slot (Z1) des ersten Zeitpunkts entspricht, erneut so lange eine Zufallszahl erzeugt, bis diese nicht mehr dem Slot des ersten Zeitpunkts (Z1) entspricht.

6. Verfahren nach Anspruch 4 oder 5, **dadurch gekennzeichnet, dass** die Zufallszahlen denjenigen Slots (Z1', Z2', Z3', Z4') zugeordnet sind, die auf den ersten Slot (Z*) nach dem Auswahlkommando (AK) folgen.

7. Verfahren nach Anspruch 2 oder 5, **dadurch gekennzeichnet, dass** bei einem Empfangen einer von der Basisstation gesendeten Synchronisationsmarke die erneute Erzeugung der Zufallszahl beendet wird.
